# EUROPÄISCHE PATENTANMELDUNG

(11) **EP 2 151 643 A2**
(43) Veröffentlichungstag der Anmeldung: **10.02.2010**
(21) Anmeldenummer: 08170134.4
(22) Anmeldetag: 27.11.2008
(51) Int. Cl.: F24J 3/08

(54) **Sondenkopf, Sonde und Verfahren zum Austausch von Wärmeenergie**

(30) Priorität: 06.08.2008 DE 102008036524
(71) Anmelder: Rausch GmbH, 36115 Hilders (DE)
(72) Erfinder: Rausch, Michael, 36115 Hilders (DE)
(74) Vertreter: Tappe, Hartmut

(57) **Zusammenfassung**

Die Erfindung betrifft einen Sondenkopf (10), eine Sonde sowie ein Verfahren zum Austausch von Wärmeenergie mit dem Erdreich mit einem Behälter, wobei der Behälter jeweils einen als Rohr (18, 21) ausgebildeten Zulauf (16) und einen Ablauf (17) aufweist, wobei der Ablauf in einen Bodenbereich (14) und der Zulauf in einen oberen Endbereich (12) des Behälters geführt ist, und wobei im oberen Endbereich des Behälters zumindest eine Strömungsführungseinrichtung (25) zur Strömungsführung eines Wärmeträgermediums gegen einer Behälterinnenwandung (24) angeordnet ist, derart, dass das Wärmeträgermedium im Wesentlichen spiralförmig um eine Behälterlängsachse (23) entlang der Behälterinnenwandung bewegbar ist.

## Beschreibung

Die Erfindung betrifft einen Sondenkopf, eine Sonde und ein Verfahren zum Austausch von Wärmeenergie mit dem Erdreich mit einem Behälter, wobei der Behälter jeweils einen als Rohr ausgebildeten Zulauf und einen Ablauf aufweist, wobei der Ablauf in einen Bodenbereich und der Zulauf in einen oberen Endbereich des Behälters geführt ist, und wobei im oberen Endbereich des Behälters zumindest eine Strömungsführungseinrichtung zur Strömungsführung eines Wärmeträgermediums gegen eine Behälterinnenwandung angeordnet ist, derart, dass das Wärmeträgermedium im Wesentlichen spiralförmig um eine Behälterlängsachse entlang der Behälterinnenwandung bewegbar ist.

Sonden zur Gewinnung von Erdwärme sind hinlänglich bekannt und werden regelmäßig in Verbindung mit Wärmepumpen zur Nutzung der gewonnenen Wärmeenergie eingesetzt. Die bekannten Sonden weisen in der Regel eine Vor- und eine Rücklaufleitung auf, welche aus einem Kunststoffrohr gebildet sind und in ein in das Erdreich eingebrachtes Bohrloch eingesetzt werden. Vermittels einer Pumpe wird ein Wärmeträgermedium durch die im Erdreich befindliche Kunststoffleitung zirkuliert, wobei in tieferen und somit wärmeren Erdschichten eine Erwärmung des Mediums erfolgt. Die sich so zwischen der Vor- und Rücklaufleitung einstellende Temperaturdifferenz ist vermittels einer Wärmepumpe beispielsweise zur Beheizung von Gebäuden nutzbar. An einem Grund des Bohrlochs ist die Kunststoffleitung in einem verhältnismäßig engen Radius gebogen bzw. als Bogenstück ausgebildet, welches mit der Vor- und Rücklaufleitung verschweißt ist. Am Leitungsbogen im Grund des Bohrlochs erfolgt aufgrund von sich dort ablagernden Kleinpartikeln ein relativ hoher Verschleiß an der Rohrleitung. Die Kleinpartikel wirken durch die Medienströmung abrasiv auf die Innenwandung des Rohrleitungsbogens, so dass dessen Wandung bis hin zur Undichtigkeit gedünnt werden kann. Zur Sicherung des Bohrlochs bzw. zur Herstellung einer guten wärmeleitenden Verbindung mit dem Erdreich wird das Bohrloch regelmäßig vom Grund ausgehend mit Zement oder ähnlichen Füllmaterialien verfüllt. Nachteilig bei derartigen Sonden ist der schlechte Wirkungsgrad, da das Wärmeträgermedium relativ schnell an den warmen Erdschichten vorbeigeleitet wird und Kunststoffleitungen eine vergleichsweise schlechte Wärmeleitfähigkeit aufweisen.

Aus der DE 30 48 870 A1 ist eine Sonde bekannt, die sich ausgehend von einem Schacht in das Erdreich erstreckt. Die Sonde ist als ein rohrförmiger Behälter ausgebildet, wobei ein Zulauf eines Wärmeträgermediums in einem Bodenbereich und ein Ablauf in einem Deckel des Behälters ausgebildet sind. In den Behälter ist eine schraubenförmig umlaufende Ringwandung in Art einer Spirale eingesetzt, die einen Ringraum ausbildet durch den das Wärmeträgermedium vom Zulauf zum Ablauf strömen kann.

Auch aus der DE 30 00 157 C2 ist eine derartige Erdsonde mit einer in einem Behälter angeordneten schraubenförmigen Wendel bekannt. Die Erdsonde verfügt über eine Bypassleitung zwischen einem Zulauf- und einem Ablaufrohr, wodurch ein mehrmaliges Durchströmen eines Behälters der Erdsonde mit einem Wärmeträgermedium ermöglicht werden soll.

Der vorliegenden Erfindung liegt daher die Aufgabe zugrunde, einen Sondenkopf bzw. eine Sonde sowie ein Verfahren zum Austausch von Wärmeenergie mit einem gegenüber den bekannten Techniken verbesserten Wirkungsgrad vorzuschlagen.

Diese Aufgabe wird durch einen Sondenkopf mit den Merkmalen des Anspruchs 1, eine Sonde mit den Merkmalen des Anspruchs 20 und ein Verfahren zum Austausch von Wärmeenergie mit den Merkmalen des Anspruchs 22 gelöst.

Der erfindungsgemäße Sondenkopf zum Austausch von Wärmeenergie mit dem Erdreich weist einen Behälter auf, wobei der Behälter jeweils einen als Rohr ausgebildeten Zulauf und einen Ablauf aufweist, und wobei der Ablauf in einen Bodenbereich und der Zulauf in einen oberen Endbereich des Behälters geführt ist. Im oberen Endbereich des Behälters ist zumindest eine Strömungsführungseinrichtung zur Strömungsführung eines Wärmeträgermediums gegen eine Behälterinnenwandung angeordnet. Bei einer Durchflussströmung wird das Wärmeträgermedium so im Wesentlichen spiralförmig um eine Behälterlängsachse entlang der Behälterinnenwandung bewegt. Ein derartiger Sondenkopf verfügt über einen wesentlich verbesserten Wirkungsgrad, da das Behältervolumen im Vergleich zu einer Rohrleitung relativ größer ist und so die Aufenthaltsdauer des Wärmeträgermediums zur Aufnahme von Wärmeenergie in der maßgeblichen Erdschicht verlängert wird. Der Wirkungsgrad wird weiter durch die Ausbildung einer spiralförmigen Strömung des Wärmeträgermediums entlang der Behälterinnenwandung verbessert. Kalte Strömungsschichten gelangen aufgrund ihrer vergleichsweise höheren Dichte und der im Spiralwirbel wirkenden Zentrifugalkräfte in eine Grenzschicht an der Behälterinnenwandung, so dass aufgrund der hohen Temperaturdifferenz zwischen der Behäterinnenwandung und der Grenzschicht ein besonders guter Austausch von Wärmeenergie ermöglicht wird.

Auch wirkt sich die Anordnung des Ablaufs im Bodenbereich des Behälters verschleißmindernd aus, da die Behälterinnenwandung gegenüber einem Rohrbogen eine verhältnismäßig größere Strömungs- bzw. Prallfläche für abrasiv wirkende Kleinpartikel aufweist und kein unmittelbarer Strömungsimpuls auf den Behälterboden gerichtet ist. Eine Ausbildung einer Strömung des Wärmeträgermediums im Behälter erfolgt beispielsweise durch Pumpen über dem Erdreich, welche in einer Vor- und/oder Rücklaufleitung eine Durchflussströmung ausbilden.

Als besonders vorteilhaft erweist es sich, wenn ein Rohrende des Zulaufs oberhalb der Strömungsführungseinrichtung angeordnet ist. Die Ausbildung einer vom oberen Endbereich bis zum Bodenbereich verlaufenden spiralförmigen Strömung ist so besonders einfach möglich, da so oberhalb der Strömungsführungseinrichtung ein gegen die Strömungsführungseinrichtung wirkender Flüssigkeitsdruck des Wärmeträgermediums erzielbar ist.

In einer Ausführungsform weist die Strömungsführungseinrichtung Lamellenelemente zur Ausbildung eines Wirbelstroms auf. Die Lamellenelemente können in Art von Turbinenschaufeln an der Behälterinnenwandung und/oder am Zulauf angeordnet bzw. befestigt sein.

Die Ausbildung einer spiralförmigen Strömung des Wärmeträgermediums ist dann besonders einfach möglich, wenn der Behälter zylinderförmig ausgebildet ist.

Ist das Verhältnis einer Behälterlänge zu einer Behälterbreite zwischen 30 bis 60 zu 1, ist ein relativ großes Behältervolumen innerhalb eines vorgegebenen Bohrlochdurchmessers realisierbar. Ein großes Behältervolumen trägt wesentlich zur Verbesserung des Wirkungsgrades durch die damit verbundene verlängerte Aufenthaltszeit des Wärmeträgermediums in der maßgeblichen Erdschicht bei.

Wenn der Sondenkopf in zumindest zwei Segmente teilbar ist, kann dieser besonders leicht zu einer Baustelle transportiert werden. So kann der Sondenkopf in der Mitte trennbar sein, beispielsweise mit am Behälter und am Zulaufrohr ausgebildeten Gewinden bzw. Verschraubungen. Der Sondenkopf kann dann besonders leicht verladen und ohne großen Aufwand in situ vollständig montiert werden.

In einer vorteilhaften Ausführungsform eines Behälterbodens, kann ein Rand des Behälterbodens gerundet oder abgeschrägt ausgebildet sein. Somit kann der Behälterboden beispielsweise eine Kalotten-, Parabel-, Kegel- oder jede andere mögliche Form aufweisen. Eine derartige Form eines Behälterbodens kann eine Zulaufströmung im Bodenbereich des Behälters zur Strömungsführungseinrichtung hin umlenken. Auch wird ein Einbringen des Behälters in ein Bohrloch erleichtert, wenn ein derartig ausgebildeter Behälterboden ein unteres Behälterende bildet.

Wenn der Zulauf einen größeren Querschnitt als der Ablauf aufweist, können die Strömungs- bzw. Druckverhältnisse im Sondenkopf besonders günstig beeinflusst werden.

Das Einbringen des Behälters in ein Bohrloch kann erleichtert werden, wenn der Ablauf durch den oberen Endbereich bis in den Bodenbereich des Behälters geführt ist. So befindet sich zwischen einer Außenwandung des Behälters und einer Bohrlochwandung keine Rohrleitung, die bei einer Positionierung des Sondenkopfs bzw. des Behälters hinderlich sein könnte.

Ist am oberen Endbereich des Behälters jeweils eine Anschlusseinrichtung zum Anschluss zumindest einer Zulaufleitung und einer Ablaufleitung ausgebildet, kann der Sondenkopf getrennt von einem Leitungssystem einer Sonde hergestellt werden und eine Montage der Sonde mit an die jeweiligen Bohrlochtiefen angepassten Leitungen wird in situ ermöglicht.

Als besonders vorteilhaft erweist es sich, wenn die Anschlusseinrichtung aus einer Verschraubung und einer die Verschraubung umgebenden Vergussmasse gebildet ist. So ist eine besonders sichere Verbindung zwischen Sondenkopf und Zulaufleitung bzw. Ablaufleitung ausbildbar, da die Vergussmasse als beispielsweise ergänzende Abdichtung wirken kann. Hinsichtlich einer Verschraubung in Kombination mit einer Vergussmasse sind alle geeigneten Verschraubungstechniken und Dichtmaterialien denkbar.

Ist der Behälter des Sondenkopfs aus Metall, kann aufgrund der vergleichsweise guten Wärmeleitfähigkeit des Metalls der Wirkungsgrad des Sondenkopfes noch weiter erhöht werden.

Weist der Sondenkopf zumindest einen Temperaturfühler auf, können die jeweiligen Messwerte zur Auswertung bzw. Anlagensteuerung an die Erdoberfläche weitergeleitet werden. So wird eine optimale Betriebsanpassung des Sondenkopfs innerhalb eines Anlagenverbundes ermöglicht.

Die Ausbildung der spiralförmigen Strömung über die gesamte Länge des Behälters wird erleichtert, wenn zumindest eine weitere Strömungsführungseinrichtung im Behälter angeordnet ist. Die weitere Strömungsführungseinrichtung kann im Bereich einer Behältermitte angeordnet sein und den Ablauf ergänzend haltern. So kann insbesondere bei einer Ausbildung des Sondenkopfes aus zwei Segmenten die Anordnung von weiteren Strömungsführungseinrichtungen in einem Fügebereich der Segmente sinnvoll sein.

In einer weiteren Ausführungsform kann die weitere Strömungsführungseinrichtung im Bodenbereich des Behälters angeordnet sein. Die spiralförmige Strömung ist dann besonders einfach über die gesamte Länge des Behälters ausbildbar, ohne dass eine bestimmte Ausführungsform des Ablaufs die spiralförmige Strömung beeinflussen könnte. Auch kann die weitere Strömungsführungseinrichtung dann so ausgebildet sein, dass das Wärmeträgermedium dem Ablauf in geeigneter Weise zugeführt wird.

Somit ist es Vorteilhaft, wenn ein Rohrende des Ablaufs unterhalb der weiteren Strömungsführungseinrichtung angeordnet ist.

Ist der Zulauf koaxial zum Ablauf angeordnet und aus einer Mehrzahl von Rohren gebildet, kann einfach ein gleichmäßiger Flüssigkeitsdruck in Fließrichtung vor der Strömungsführungseinrichtung ausgebildet werden. Auch ist so ein Zulauf mit einem gegenüber einem Ablauf relativ größeren Querschnitt leicht ausbildbar. Die den Zulauf ausbildenden Rohre können dann vergleichsweise dünn ausgeführt sein, was eine Verschraubung der Rohre mit Zulaufleitungen neben einer koaxial angeordneten Ablaufleitung bei einem vergleichsweise schlanken Sondenkopf vereinfacht. Auch können so mehrere Zulaufleitungen verwendet werden, über die bereits ein Austausch von Wärmeenergie mit dem Erdreich erfolgen kann.

In einer Ausführungsform kann der Zulauf aus sechs Rohren gebildet sein. Die Rohre sind dann koaxial zum Ablauf bzw. einer Behälterlängsachse des Sondenkopfs symmetrisch angeordnet. Weitere Ausführungsformen eines Zulaufs mit mehr oder weniger als sechs Rohren sind jedoch auch möglich.

Als besonders vorteilhaft erweist es sich, wenn der Sondenkopf so ausgebildet ist, dass der Zulauf als Ablauf und der Ablauf als Zulauf nutzbar ist. Die Strömungsrichtung innerhalb des Behälters kann so bei Bedarf umgekehrt werden. Dies kann zu Reinigungszwecken oder zur Kühlung eines Wärmeträgermediums sinnvoll sein.

Auch kann zumindest ein Rohrende des Zulaufs eine Durchmesserreduzierung aufweisen, die eine Expansion und eine lokal begrenzte Erhöhung der Strömungsgeschwindigkeit des Wärmeträgermediums ermöglicht.

Die erfindungsgemäße Sonde mit einem Sondenkopf weist am Sondenkopf eine Zulaufleitung und eine Ablaufleitung auf, die jeweils am Sondenkopf angeschlossen ist. Die Zulaufleitung oder vorzugsweise die Ablaufleitung ist temperaturisoliert, so dass ein im Sondenkopf erwärmtes Wärmeträgermedium bei einem Rückfluss durch relativ kältere Erdschichten nicht wesentlich an Wärmeenergie verliert und somit ein erhöhter Wirkungsgrad für die Sonde erzielbar ist.

In einer vorteilhaften Ausführungsform kann die Temperaturisolierung als Vakuumisolierung ausgebildet sein. Eine Vakuumisolierung ermöglicht eine sehr gute Temperaturisolierung bei einem vergleichsweise dünnwandigen Isolierquerschnitt.

Weitere vorteilhafte Ausführungsformen einer Sonde ergeben sich aus den Merkmalsbeschreibungen der auf den Vorrichtungsanspruch 1 rückbezogenen Unteransprüche.

Bei dem erfindungsgemäßen Verfahren zum Austausch von Wärmeenergie mit dem Erdreich mit einem Sondenkopf wird dem im Erdreich befindlichen, als Behälter ausgebildeten Sondenkopf ein Wärmeträgermedium durch einen Zulauf kontinuierlich zugeführt, wobei das Wärmeträgermedium vermittels einer Strömungsführungseinrichtung im Wesentlichen spiralförmig um eine Behälterlängsachse entlang einer Behälterinnenwandung bewegt wird, wobei ein Austausch von Wärmeenergie zwischen dem Wärmeträgermedium und der Behälterinnenwandung erfolgt und nachfolgend das Wärmeträgermedium durch einen Ablauf abgeführt wird, und wobei das Erdreich zur Speicherung von Wärmeenergie genutzt wird. Das Verfahren ermöglicht insbesondere die Erzielung eines hohen Wirkungsgrades durch die relativ lange Verweildauer des Wärmeträgermediums in der dafür vorgesehenen Erdschicht bzw. durch die Strömungsführung entlang der Behälterinnenwandung. Insbesondere aufgrund des hohen Wirkungsgrades ist das Verfahren zur Speicherung von Wärmeenergie im Erdreich geeignet. So ist das Erdreich im Bereich des Sondenkopfes durch Zu- bzw. Abführung von Wärmeenergie als Wärmespeicher besonders gut nutzbar.

Weitere vorteilhafte Ausführungsformen des Verfahrens ergeben sich aus den Merkmalsbeschreibungen der auf den Vorrichtungsanspruch 1 rückbezogenen Unteransprüche.

Im Folgenden wird die Erfindung unter Bezugnahme auf die beigefügten Zeichnungen näher erläutert.

Es zeigen:
- **Fig.1**: eine schematische Längsschnittansicht einer Ausführungsform eines Sondenkopfs;
- **Fig. 2**: eine Schnittansicht entlang einer Linie II-II aus **Fig. 1****;**
- **Fig. 3**: eine Schnittansicht entlang einer Linie III-III aus **Fig. 1****.**

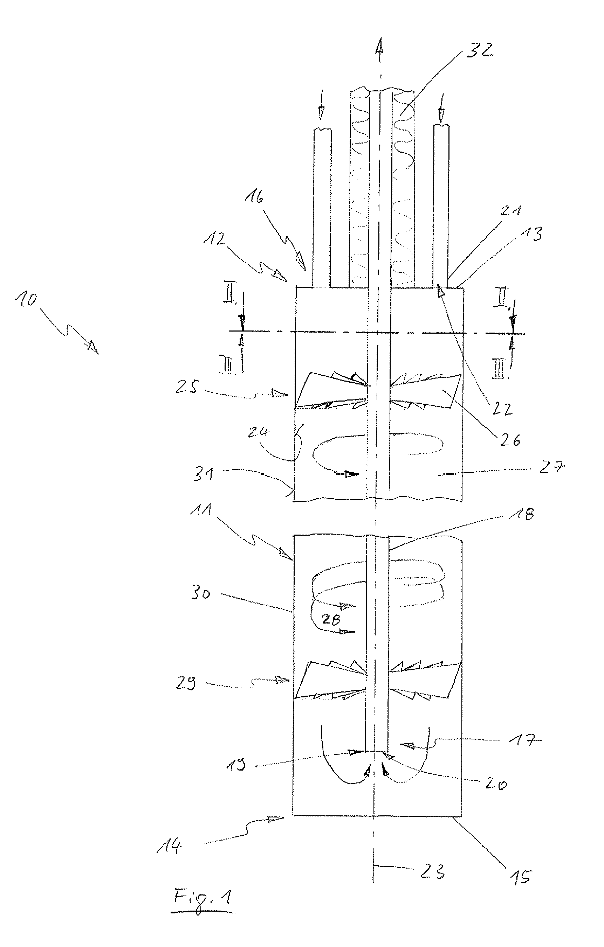

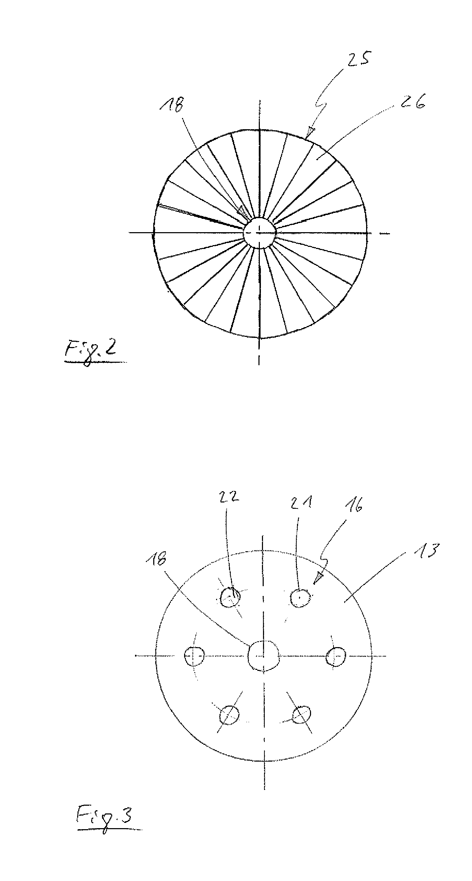

Eine Zusammenschau der **Fig. 1** bis **3** zeigt eine schematische Darstellung einer Ausführungsform eines Sondenkopfs 10 jeweils in einer Schnittansicht. Der Sondenkopf 10 ist aus einem Rohr 11, welches in einem oberen Endbereich 12 mit einer Platte 13 und in einem Bodenbereich 14 mit einer Platte 15 dicht verschlossen ist, gebildet. Der Sondenkopf 10 verfügt weiter über einen Zulauf 16 und einen Ablauf 17, wobei der Ablauf 17 als ein Rohr 18 ausgebildet ist, welches koaxial zum Rohr 11 durch die Platte 13 hindurch in den Bodenbereich 14 geführt ist und an seinem Ende 19 eine Ablauföffnung 20 aufweist. Der Zulauf 16 weist eine Mehrzahl von Rohren 21 auf, die in der Platte 13 Zulauföffnungen 22 ausbilden. Die Zulauföffnungen 22 sind achsensymmetrisch relativ zu einer Längsachse 23 des Sondenkopfs 10 in einer zwischen dem Rohr 18 und einer Behälterinnenwandung 24 vermittelten Lage angeordnet.

Im oberen Endbereich 12 ist eine Strömungsführungseinrichtung 25 mit einer Mehrzahl von Lamellenelementen 26 angeordnet. Ein hier nicht näher dargestelltes Wärmeträgermedium tritt an den Zulauföffnungen 22 in einen Behälterinnenraum 27 des Sondenkopfs 10 aus und wird durch die Strömungsführungseinrichtung 25 geleitet. Die Lamellenelemente 26 der Strömungsführungseinrichtung 25 sind um die Längsachse 23 des Sondenkopfs 10 schraubenförmig in Art eines Propellers angeordnet, so dass das Wärmeträgermedium eine spiralförmige Strömung, wie mit den Pfeilen 28 angedeutet, vom oberen Endbereich 12 zum Bodenbereich 14 ausbildet. Vor der Ablauföffnung 20 ist am Ende 19 des Rohrs 18 eine weitere Strömungsführungseinrichtung 29 angeordnet. Das Wärmeträgermedium durchströmt die weitere Strömungsführungseinrichtung 29 und gelangt durch die Ablauföffnung 20 in den Ablauf 17. Da der Sondenkopf 10 den in einem hier nicht näher dargestellten Bohrloch in einer Erdschicht mit vergleichsweise hoher, gleich bleibender Temperatur angeordnet ist, wird das Wärmeträgermedium beim Durchfluss durch den Sondenkopf 10 entsprechend einer vorliegenden Temperaturdifferenz erwärmt. Eine Erwärmung des Wärmeträgermediums erfolgt insbesondere Mittels der Behälterinnenwandung 24 an der das Wärmeträgermedium, wie zuvor beschrieben, spiralförmig entlang geführt wird. Eine Wandung 30 des Sondenkopfs 10 besteht vorzugsweise aus Edelstahl, so dass eine gute Wärmeleitung zwischen einer Behälteraußenwandung 31 und der Behälterinnenwandung 24 erfolgt. Innerhalb der spiralförmigen Strömung 28 kann beispielsweise auch ein Austausch von unterschiedlich temperierten und hier nicht näher dargestellten Strömungsschichten erfolgen. Kältere Strömungsschichten würden aufgrund ihrer vergleichsweise höheren Dichte und der so wirksamen Zentrifugalkraft in Richtung der Behälterinnenwandung 24 bewegt werden. In Folge der vorbeschriebenen Strömungsverhältnisse und des vergleichsweise großen Behälterinnenraums 27 bzw. der entsprechenden Volumenmenge eines Wärmeträgermediums sowie der daraus resultierenden Aufenthaltszeit des Wärmeträgermediums im Sondenkopf 10 ist ein besonders hoher Wirkungsgrad des Sondenkopfs 10 erzielbar. Um einen temperaturverlustfreien Rücktransport des Wärmeträgermediums zu gewährleisten, ist eine Vakuumisolierung 32 an einer Ablaufleitung 33 vorgesehen.

## Patentansprüche

1. Sondenkopf (10) zum Austausch von Wärmeenergie mit dem Erdreich mit einem Behälter, wobei der Behälter einen als zumindest ein Rohr (18, 21) ausgebildeten Zulauf (16) und einen Ablauf (17) aufweist, wobei der Ablauf in einen Bodenbereich (14) und der Zulauf in einen oberen Endbereich (12) des Behälters geführt ist, und wobei im oberen Endbereich des Behälters zumindest eine Strömungsführungseinrichtung (25) zur Strömungsführung eines Wärmeträgermediums gegen eine Behälterinnenwandung (24) angeordnet ist, derart, dass das Wärmeträgermedium im Wesentlichen spiralförmig um eine Behälterlängsachse (23) entlang der Behälterinnenwandung bewegbar ist.

2. Sondenkopf nach Anspruch 1,
**dadurch gekennzeichnet,**
**dass** ein Rohrende des Zulaufs (16) oberhalb der Strömungsführungseinrichtung (25) angeordnet ist.

3. Sondenkopf nach Anspruch 1 oder 2,
**dadurch gekennzeichnet,**
**dass** die Strömungsführungseinrichtung (25) Lamellenelemente (26) zur Ausbildung eines Wirbelstroms aufweist.

4. Sondenkopf nach einem der vorangehenden Ansprüche,
**dadurch gekennzeichnet,**
**dass** der Behälter zylinderförmig ausgebildet ist.

5. Sondenkopf nach einem der vorangehenden Ansprüche,
**dadurch gekennzeichnet,**
**dass** das Verhältnis einer Behälterlänge zu einer Behälterbreite zwischen 30 bis 60 zu 1 ist.

6. Sondenkopf nach einem der vorangehenden Ansprüche,
**dadurch gekennzeichnet,**
**dass** der Sondenkopf in zumindest zwei Segmente teilbar ist.

7. Sondenkopf nach einem der vorangehenden Ansprüche,
**dadurch gekennzeichnet,**
**dass** ein Rand eines Behälterbodens gerundet oder abgeschrägt ausgebildet ist.

8. Sondenkopf nach einem der vorangehenden Ansprüche,
**dadurch gekennzeichnet,**
**dass** der Zulauf (16) einen größeren Querschnitt als der Ablauf (17) aufweist.

9. Sondenkopf nach einem der vorangehenden Ansprüche,
**dadurch gekennzeichnet,**
**dass** der Ablauf (17) durch den oberen Endbereich (12) bis in den Bodenbereich (14) des Behälters geführt ist.

10. Sondenkopf nach Anspruch 9,
**dadurch gekennzeichnet,**
**dass** am oberen Endbereich (12) jeweils eine Anschlusseinrichtung zum Anschluss zumindest einer Zulaufleitung und einer Ablaufleitung ausgebildet ist.

11. Sondenkopf nach Anspruch 10,
**dadurch gekennzeichnet,**
**dass** die Anschlusseinrichtung aus einer Verschraubung und einer die Verschraubung umgebenden Vergussmasse gebildet ist.

12. Sondenkopf nach einem der vorangehenden Ansprüche,
**dadurch gekennzeichnet,**
**dass** der Behälter aus Metall ist.

13. Sondenkopf nach einem der vorangehenden Ansprüche,
**dadurch gekennzeichnet,**
**dass** der Sondenkopf (10) zumindest einen Temperaturfühler aufweist.

14. Sondenkopf nach einem der vorangehenden Ansprüche,
**dadurch gekennzeichnet,**
**dass** zumindest eine weitere Strömungsführungseinrichtung (29) zur Strömungsführung des Wärmeträgermediums im Behälter angeordnet ist.

15. Sondenkopf nach Anspruch 14,
**dadurch gekennzeichnet,**
**dass** die weitere Strömungsführungseinrichtung (29) im Bodenbereich (14) des Behälters angeordnet ist.

16. Sondenkopf nach Anspruch 15,
**dadurch gekennzeichnet,**
**dass** ein Rohrende (19) des Ablaufs (17) unterhalb der weiteren Strömungsführungseinrichtung (29) angeordnet ist.

17. Sondenkopf nach einem der vorangehenden Ansprüche,
**dadurch gekennzeichnet,**
**dass** der Zulauf (16) koaxial zum Ablauf (17) angeordnet und aus einer Mehrzahl von Rohren (21) gebildet ist.

18. Sondenkopf nach Anspruch 17,
**dadurch gekennzeichnet,**
**dass** der Zulauf (16) aus sechs Rohren (21) gebildet ist.

19. Sondenkopf nach einem der vorangehenden Ansprüche,
**dadurch gekennzeichnet,**
**dass** der Sondenkopf (10) so ausgebildet ist, dass der Zulauf (16) als Ablauf und der Ablauf (17) als Zulauf nutzbar ist.

20. Sonde mit einem Sondenkopf nach einem der Ansprüche 1 bis 19,
**dadurch gekennzeichnet,**
**dass** am Sondenkopf (10) zumindest eine Zulaufleitung und eine Ablaufleitung angeschlossen sind und die Zulaufleitung oder die Ablaufleitung temperaturisoliert ist.

21. Sonde nach Anspruch 20,
**dadurch gekennzeichnet,**
**dass** eine Temperaturisolierung als Vakuumisolierung (32) ausgebildet ist.

22. Verfahren zum Austausch von Wärmeenergie mit dem Erdreich mit einem Sondenkopf (10) nach einem der Ansprüche 1 bis 19,
**dadurch gekennzeichnet,**
**dass** dem im Erdreich befindlichen, als Behälter ausgebildeten Sondenkopf ein Wärmeträgermedium durch einen Zulauf (16) kontinuierlich zugeführt wird, das Wärmeträgermedium vermittels einer Strömungsführungseinrichtung (25) im Wesentlichen spiralförmig um eine Behälterlängsachse (23) entlang einer Behälterinnenwandung (24) bewegt wird, wobei ein Austausch von Wärmeenergie zwischen dem Wärmeträgermedium und der Behälterinnenwandung erfolgt und nachfolgend das Wärmeträgermedium durch einen Ablauf (17) abgeführt wird, und wobei das Erdreich zur Speicherung von Wärmeenergie genutzt wird.
